# EUROPÄISCHE PATENTANMELDUNG

(11) **EP 1 669 925 A2**
(43) Veröffentlichungstag der Anmeldung: **14.06.2006**
(21) Anmeldenummer: 05024981.2
(22) Anmeldetag: 16.11.2005
(51) Int. Cl.: G06T 3/40

(54) **Verfahren zur Skalierung eines Bildzeichens**

(30) Priorität: 07.12.2004 DE 102004058937
(71) Anmelder: Micronas GmbH, 79108 Freiburg i. Br. (DE)
(72) Erfinder: Wendel, Dirk, 85630 Grasbrunn (DE); Langenkamp, Ulrich, 85579 Neubiberg (DE); Hahn, Marko, 85579 Neubiberg (DE)
(74) Vertreter: Patentanwälte Westphal, Mussgnug & Partner

(57) **Zusammenfassung**

Die Erfindung betrifft ein Verfahren zur Skalierung eines Bildzeichens, das eine Zeichenmatrix mit einer Anzahl Zeicheneinheiten, die wenigstens in einer horizontalen Richtung oder einer vertikalen Richtung nicht unterteilbar sind, aufweist, wobei das Verfahren folgende Verfahrensschritte umfasst:
- Unterteilen der Zeichenmatrix in einen ersten und wenigstens einen zweiten Zeichenabschnitt, die jeweils wenigstens eine der Zeicheneinheiten umfassen,
- symmetrisches Skalieren des ersten Zeichenabschnitts mit einem ersten Skalierungsfaktor,
- Skalieren des wenigstens einen zweiten Zeichenabschnittes mit einem zu dem ersten Skalierungsfaktor unterschiedlichen zweiten Skalierungsfaktor.

## Beschreibung

Die vorliegende Erfindung betrifft ein Verfahren zur Skalierung eines Bildzeichens, insbesondere zur Skalierung eines Teletextzeichens, insbesondere mit einem nicht-ganzzahligen Skalierungsfaktor.

Zur Darstellung von Informationen auf einer matrixartig aufgebauten Anzeigevorrichtung, beispielsweise einem Bildschirm, ist es bekannt, Zeichen zu verwenden, die ihrerseits matrixartig aufgebaut sind. Ein Beispiel für solche Zeichen sind Teletextzeichen, die zur Darstellung von Teletextinformationen dienen, die während der sogenannten Austastlücke bei der Fernsehübertragung übertragen werden. Diese Teletextzeichen umfassen abhängig von der Sprache, in der die Textdarstellung erfolgen soll, die Symbole die zur Darstellung von Text- und Zahleninformationen auf der Anzeigevorrichtung erforderlich sind, insbesondere die Zahlzeichen der jeweiligen Sprache und die Buchstaben des jeweiligen Alphabets.

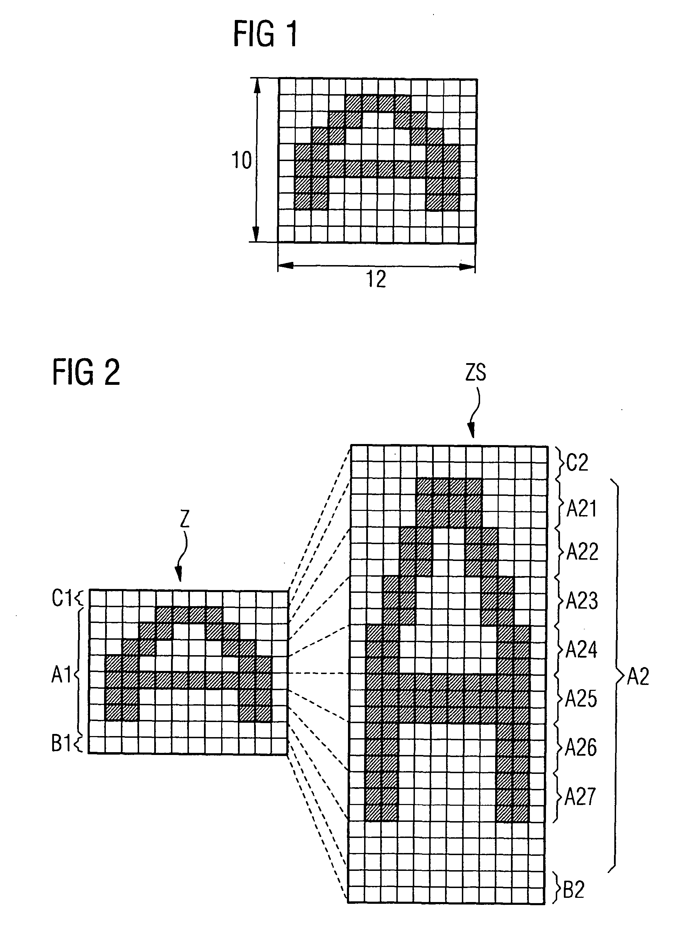

Die einzelnen Teletextzeichen umfassen für Teletextdarstellungen in Europa eine Bildpunktmatrix mit 10 x 12 Bildpunkten, also eine Matrix mit 10 Bildpunktzeilen und 12 Bildpunktspalten. Die Zeilen und Spalten stellen dabei jeweils Zeicheneinheiten dar, die in Zeilenrichtung bzw. Spaltenrichtung nicht weiter unterteilbar sind. Eine solches Teletextzeichen, ist in Figur 1 anhand des den Buchstaben "A" repräsentierenden Zeichens dargestellt.

Eine Standard-Teletextseite umfasst 25 Zeilen mit jeweils 56 Zeichen der in Figur 1 dargestellten Art, so dass zur Darstellung einer solchen Teletextseite eine Anzeigevorrichtung mit 250 Bildpunktzeilen und 672 Bildpunktspalten (250x672 = 25·10 x 56·12) erforderlich ist. Moderne Anzeigevorrichtungen, beispielsweise LCD-Displays, Plasma-Displays oder DLP-Displays (DLP = Digital Light Processing), besitzen allerdings Auflösungen, die weit über der zur Darstellung einer Teletextseite erforderlichen Auflösung liegt. Die Darstellung einer Teletextseite auf einer solchen Anzeigenvorrichtung macht eine Skalierung der einzelnen Zeichen erforderlich, wenn erreicht werden soll, dass die Teletextseite das zur Verfügung stehende Bildraster wenigstens annähernd vollständig ausfüllt.

Eine derartige Skalierung mit einem Skalierungsfaktor größer als Eins ist vergleichsweise einfach durchführbar, wenn eine Skalierung mit einem ganzzahligen Skalierungsfaktor erreicht werden soll. Stehen anstatt 250 Zeilen beispielsweise k·250 Zeilen zur Darstellung zur Verfügung, wobei k eine ganze Zahl ist, so genügt es, die einzelnen Zeilen der Teletextzeichen, die die Teletextseite bilden, lediglich k-mal zu wiederholen, d.h. in k aufeinanderfolgenden Zeilen des Bildes wiederzugeben. Eine entsprechende ganzzahlige Skalierung kann in Spaltenrichtung durch wiederholte Wiedergabe der einzelnen Spalten der die Teletextseite bildenden Spalten erreicht werden.

Schwieriger ist die Skalierung bei nicht-ganzzahligen Skalierungsfaktoren, wie nachfolgend anhand eines Beispiels erläutert wird:

Üblich für LCD-, Plasma- oder DLP-Anzeigevorrichtungen sind Auflösungen im sogenannten WXGA-Format, das 1280 Bildspalten mal 720 Bildzeilen (1280 x 720) umfasst. Zur "zeilenfüllenden" Darstellung eines Teletextzeichens auf einer solchen Anzeigevorrichtung ist eine Skalierung in Zeilenrichtung mit einem nicht-ganzzahligen Skalierungsfaktor von 2,88 (=720/250) erforderlich. Ein Kompromiss könnte vorsehen, den Skalierungsfaktor auf die nächstkleinere ganze Zahl 2 abzurunden, was eine nicht vollständige Nutzung der zur Verfügung stehenden Darstellungsfläche zur Folge hätte; 220 (=720-2·250) der insgesamt 720 Zeilen blieben ungenutzt. Ein Aufrunden des Skalierungsfaktors auf die nächstgrößere ganze Zahl hätte zur Folge, dass eine oder einige Zeilen am oberen oder unteren Rand des Teletextextbildes nicht mehr dargestellt würden, was ebenfalls nicht akzeptabel ist.

Zur Skalierung der einzelnen Zeichen mit einem nicht-ganzzahligen Skalierungsfaktor ist es weiterhin bekannt, die einzelnen Zeilen nach einem vorgegebenen Schema unterschiedlich zu skalieren. So kann ein Gesamt-Skalierungsfaktor von 2,8 beispielsweise dadurch erreicht werden, dass jede fünfte Zeile mit einem Skalierungsfaktor von 2 skaliert wird, während die übrigen Zeilen mit einem Skalierungsfaktor von 3 skaliert werden. Ein derartiges Vorgehen kann allerdings zu Unsymmetrien bei den vergrößerten Zeichen führen.

Soll eine Skalierung eines Zeichens mit einem Skalierungsfaktor kleiner als Eins erreicht werden, so müssen je nach Skalierungsrichtung Bildpunktzeilen oder Bildpunktspalten gestrichen/gelöscht werden. Ein solches Streichen/Löschen von Zeilen bzw. Spalten wird von einem Betrachter dann als weniger störend empfunden, wenn Zeilen bzw. Spalten des Zeichens, die regelmäßig beabstandet sind, gelöscht werden, bzw. wenn nach dem Löschen nur solche Zeilen bzw. Spalten des ursprünglichen Bildes verbleiben, die regelmäßig beabstandet sind.

Ziel der vorliegenden Erfindung ist es, ein Verfahren zur Skalierung eines Zeichens, das eine Anzahl Zeicheneinheiten umfasst, die wenigstens in einer horizontalen Richtung oder einer vertikalen Richtung nicht unterteilbar sind zur Verfügung zu stellen, bei dem Unsymmetrien in der Darstellung des skalierten Zeichens vermieden werden.

Dieses Ziel wird durch ein Verfahren gemäß der Merkmale des Anspruchs 1 erreicht. Vorteilhafte Ausgestaltungen der Erfindung sind Gegenstand der Unteransprüche.

Das Verfahren zur Skalierung eines Bildzeichens, das eine Zeichenmatrix mit einer Anzahl Zeicheneinheiten, die wenigstens in einer horizontalen Richtung oder einer vertikalen Richtung nicht unterteilbar sind, aufweist, umfasst folgende Verfahrensschritte:
- Unterteilen der Zeichenmatrix in einen ersten und wenigstens einen zweiten Zeichenabschnitt, die jeweils wenigstens eine der Zeicheneinheiten umfassen,
- symmetrisches Skalieren des ersten Zeichenabschnitts mit einem ersten Skalierungsfaktor,
- Skalieren des zweiten Zeichenabschnittes mit einem zu dem ersten Skalierungsfaktor unterschiedlichen zweiten Skalierungsfaktor.

Unter "Zeicheneinheiten" sind im folgenden Zeilen der Zeichenmatrix zu verstehen, wenn eine Skalierung des Zeichens in Zeilenrichtung erfolgen soll, und unter "Zeicheneinheiten" sind Spalten der Zeichenmatrix zu verstehen, wenn eine Skalierung des Zeichens in Spaltenrichtung erfolgen soll.

Selbstverständlich kann ein Zeichen in Zeilenrichtung und unabhängig davon in Spaltenrichtung skaliert werden, wobei die Zeichenmatrix bei einer Zeilen-Skalierung einmal zeilenweise in wenigstens zwei Abschnitte unterteilt wird und bei einer Spalten-Skalierung spaltenweise in wenigstens zwei Abschnitte unterteilt wird.

Unter Skalierung ist im Zusammenhang mit der vorliegenden Erfindung entweder eine Erhöhung der Anzahl der Zeicheneinheiten des jeweiligen Zeichenabschnittes oder eine Verringerung der Anzahl der Zeicheneinheiten des jeweiligen Zeichenabschnittes zu verstehen. Eine Skalierung mit einem Skalierungsfaktor größer Eins wird dabei erreicht werden, indem die jeweiligen Zeicheneinheiten entsprechend dem Wert des Skalierungsfaktors wiederholt werden. Eine Skalierung mit einem Skalierungsfaktor kleiner Eins (und größer Null) wird dabei erreicht werden, indem einzelne Zeicheneinheiten gestrichen werden.

Eine symmetrische Skalierung des ersten Zeichenabschnitts mit einem ersten Skalierungsfaktor größer als Eins bedeutet dabei, dass alle Zeicheneinheiten des ersten Abschnitts entsprechend des Wertes des ersten Skalierungsfaktors wiederholt nebeneinander dargestellt werden, wobei der erste Skalierungsfaktor ganzzahlig ist. Eine symmetrische Skalierung des ersten Zeichenabschnitts mit einem ersten Skalierungsfaktor kleiner als Eins bedeutet dabei, dass der erste Zeichenabschnitt in wenigstens zwei Unterabschnitte mit jeweils gleich vielen Zeicheneinheiten unterteilt und aus jedem Zeichenabschnitt gleich viele Zeicheneinheiten an jeweils gleichen Positionen der Unterabschnitte gelöscht werden.

Die Skalierungsfaktoren für den ersten Abschnitt und den wenigstens einen zweiten Abschnitt sind in jedem Fall so aufeinander abgestimmt, dass betrachtet auf das gesamte Zeichen eine Skalierung mit dem gewünschten Skalierungsfaktor erreicht wird, d.h. dass die Anzahl der Zeicheneinheiten des skalierten Zeichens dem Produkt aus der Anzahl der Zeicheneinheiten des zu skalierenden Zeichens und dem Skalierungsfaktor entspricht.

Das Verfahren macht sich insbesondere die Erkenntnis zu Nutze, dass die Zeichenmatrix von Bildzeichen in vielen Fällen einen Zeicheninformationen enthaltenden Informationsabschnitts und einen keine Zeicheninformationen enthaltenden Leerabschnitt aufweist. Unter "Leerabschnitten" sind nachfolgend Leerzeilen zu verstehen, wenn die Zeicheneinheiten Zeilen sind, und Leerspalten zu verstehen, wenn die Zeileneinheiten Spalten sind. Die Leerabschnitte trennen das Bildpunktmuster des jeweiligen Zeichens optisch von einem benachbart auf der Anzeigevorrichtung darzustellenden Zeichen.

Der Informationsabschnitt enthält bei solchen Zeichen das Bildpunktmuster, das das einzelne Zeichen charakterisiert, während der Leerabschnitt keine Zeicheninformationen oder allenfalls weniger relevante bzw. nur bei wenigen Bildzeichen eines Bildzeichensatzes vorkommende Zeicheninformationen enthält. Solche weniger relevanten bzw. selten vorkommenden Zeicheninformationen sind beispielsweise Akzent-Zeichen, Apostroph-Zeichen, Punkte von Umlautzeichen, usw.

Bei Zeichen mit einem Leerabschnitt wird der erste Zeichenabschnitte so gewählt, dass er dem Informationsabschnitt entspricht, während der zweite Zeichenabschnitt so gewählt wird, dass er dem Leerabschnitt entspricht. Bei dem erfindungsgemäßen Verfahren, bei dem das Zeichen in zwei Zeichenabschnitte unterteilt wird, die unterschiedlich skaliert werden, können die Skalierungsfaktoren für die beiden Zeichenabschnitte dabei so gewählt werden, dass zumindest der Informationsabschnitt symmetrisch skaliert wird, so dass keine Unsymmetrien bei der Darstellung des Bildpunktmusters, welches das Zeichen charakterisiert, auftreten. Dass der wenigstens eine zweite Zeichenabschnitt mit einem zu dem ersten Skalierungsfaktor unterschiedlichen zweiten Skalierungsfaktor skaliert wird, fällt optisch nicht oder nur kaum auf, wenn dieser zweite Abschnitt ein Leerabschnitt ist, der also keine Information enthält und der nur als "Abstandhalter" zu benachbart auf der Anzeigevorrichtung dargestellten Zeichen dient oder der nur bei wenigen Zeichen für eine Zeicheninformation genutzt wird, beispielsweise für Accents, Umlaute, Ober- oder Unterlängen. Eine Skalierung dieser Zeicheninformationen, die optisch üblicherweise von dem Rest des Zeichens abgesetzt sind, mit einem anderen Skalierungsfaktor als der Teil des Zeichens in dem ersten Zeichenabschnitt ist optisch üblicherweise kaum auffällig.

Vorzugsweise wird die Zeichenmatrix in zwei zweite Zeichenabschnitte unterteilt, wobei der erste Zeichenabschnitt zwischen den zweiten Zeichenabschnitten angeordnet ist. Diese zwei zweiten Zeichenabschnitte können mit einem gemeinsamen zweiten Skalierungsfaktor skaliert werden oder können mit unterschiedlichen zweiten Skalierungsfaktoren skaliert werden. Es besteht insbesondere die Möglichkeit, dass die zweiten Zeichenabschnitte so gewählt sind, dass sie jeweils nur eine Zeicheneinheit, also eine Zeile oder eine Spalte umfassen.

Das Zeichen ist insbesondere ein Teletextzeichen mit einer Zeichenmatrix von 12 Spalten mal 10 Zeilen.

Die vorliegende Erfindung wird nachfolgend in Ausführungsbeispielen anhand von Figuren näher erläutert.
- Figur 1: veranschaulicht den bildpunktartigen Aufbau eines Teletextzeichens anhand des Zeichens für den Buchstaben "A".
- Figur 2: veranschaulicht eine Skalierung des Teletextzeichens "A" mit einem nicht-ganzzahligen Skalierungsfaktor in Zeilenrichtung unter Anwendung des erfindungsgemäßen Verfahrens.
- Figur 3: veranschaulicht einen Algorithmus zur Ermittlung der Skalierungsfaktoren für einzelne Zeichenabschnitte.
- Figur 4: enthält in Tabellenform eine Zusammenstellung für erste und zweite Skalierungsfaktoren für unterschiedliche Anzeigevorrichtungen.

In den Figuren bezeichnen, sofern nicht anders angegeben gleiche Bezugszeichen gleiche Teile und Signale mit gleicher Bedeutung.

Die Erfindung wird zunächst für den Fall erläutert, bei dem eine Skalierung eines Zeichens mit einem nicht-ganzzahligen Skalierungsfaktor größer als Eins erreicht werden soll.

Figur 2 zeigt im linken Teil ein zu skalierendes Zeichen Z, das eine Bildpunktmatrix mit m-Zeilen von je n-Bildpunkten umfasst. Das dargestellte Zeichen entspricht in dem Beispiel dem Teletextzeichen des Buchstabens "A", das m = 10 Zeilen mit je n = 12 Bildpunkten umfasst. Ziel ist es, dieses Zeichen Z in Zeilenrichtung mit einem nicht-ganzzahligen Skalierungsfaktor S zu skalieren, um ein skaliertes Zeichen ZS zu erhalten, das eine Bildpunktmatrix mit S·m-Zeilen von je n-Bildpunkten umfasst. Eine solche Skalierung, bei der die Anzahl der Zeilen der Bildpunktmatrix vergrößert wird, wird nachfolgend als Zeilenskalierung bezeichnet.

Zur Skalierung des dargestellten, eine m x n-Bildpunktmatrix umfassenden Teletextzeichens Z, in Zeilenrichtung ist bei dem erfindungsgemäßen Verfahren vorgesehen, die Zeichenmatrix in einen ersten Zeichenabschnitt A1 und wenigstens einen zweiten Zeichenabschnitt B1, C1 zu unterteilen, wobei jeder dieser Zeichenabschnitte A1, B1, C1 wenigstens eine Zeile der Bildpunktmatrix umfasst. Die Zeilen der Bildpunktmatrix bilden dabei Zeicheneinheiten, die in vertikaler Richtung der Bildpunktmatrix nicht weiter unterteilbar sind. Das Zeichen Z ist in dem dargestellten Ausführungsbeispiel in drei Zeichenabschnitte unterteilt, nämlich den ersten Zeichenabschnitt A1 und in zwei zweite Zeichenabschnitte B1, C1. Der erste Zeichenabschnitt A1 bildet dabei einen Informationsabschnitt des Zeichens, der das das Zeichen charakterisierende Bildpunktmuster, in dem dargestellten Beispiel ein Schwarz-Weiß-Muster mit schwarzen und weißen Bildpunkten, umfasst. Die zweiten Zeichenabschnitte B1, C1 bilden Leerabschnitte oder Leerzeilen, wobei einer dieser Leerzeilen B1 die Bildpunktmatrix in vertikaler Richtung nach unten hin abschließt und wobei die andere dieser Leerzeilen C1 die Bildpunktmatrix in vertikaler Richtung nach oben hin abschließt.

Zur Skalierung dieses Zeichens Z ist vorgesehen, den ersten Zeichenabschnitt A1 symmetrisch mit einem ersten ganzzahligen Skalierungsfaktor zu skalieren, indem die Zeilen dieses ersten Abschnittes A1 entsprechend dem Wert dieses Skalierungsfaktors wiederholt nebeneinander dargestellt werden. Die Skalierung kann in nicht näher dargestellter Weise auch eine Filterung umfassen. Diese Filterung kann insbesondere so ausgebildet sein kann, dass blockartige oder treppenartige Strukturen in dem skalierten Zeichen "geglättet" werden.

In dem in Figur 2 dargestellten Ausführungsbeispiel beträgt dieser erste Skalierungsfaktor S1=3. Die Zeilen dieses ersten Zeichenabschnittes A1 werden also jeweils dreimal aufeinanderfolgend dargestellt, um einen skalierten ersten Zeichenabschnitt A2 des skalierten Zeichens ZS zu erhalten.

Die symmetrische Skalierung aller Zeilen des ersten Zeichenabschnittes A1 mit dem ganzzahligen ersten Skalierungsfaktor S1 bewirkt, dass das in dem ersten Zeichenabschnitt A2 des skalierten Zeichens ZS vorhandene Bildmuster keine Unsymmetrien im Vergleich zu dem Bildmuster des zu skalierenden Zeichens Z aufweist. Um insgesamt eine Skalierung des Zeichens Z mit einem nicht-ganzzahligen Skalierungsfaktor zu erreichen, werden die zweiten Zeichenabschnitte B1, C1 mit einem zweiten Skalierungsfaktor S2 skaliert, der unterschiedlich ist zu dem ersten Skalierungsfaktor S1 und der nicht notwendiger Weise ganzzahlig sein muss.

In dem dargestellten Beispiel beträgt dieser zweite Skalierungsfaktor, mit dem die Zeichenabschnitte B1, C1 skaliert werden S2 = 2. Die unterschiedliche Skalierung der ersten und zweiten Zeichenabschnitte A1, B1, C1 fällt bei Betrachtung des skalierten Zeichens optisch nicht auf, da die zweiten Zeichenabschnitte B1, C1 so gewählt sind, dass sie Leerabschnitte sind, dass sie also keine Zeicheninformation enthalten. Diese Leerzeilen dienen bei Darstellung mehrerer Zeichen übereinander und nebeneinander auf einer Anzeigevorrichtung dazu, die einzelnen Zeichen optisch voneinander zu trennen. Eine Skalierung dieser Trennabschnitte B1, C2 mit einem anderen Skalierungsfaktor S2 wie der Skalierungsfaktor S1 des die Zeicheninformation enthaltenden ersten Abschnittes A1 ist für den Betrachter, im Gegensatz zur Verwendung unterschiedlicher Skalierungsfaktoren innerhalb des die Zeicheninformation enthaltenden Abschnittes A1, kaum auffällig.

Bei dem Verfahren besteht insbesondere die Möglichkeit, die beiden Leerabschnitte B1, C1 je nach Bedarf mit unterschiedlichen Skalierungsfaktoren zu skalieren.

Wird zur Skalierung der Leerabschnitte ein nicht-ganzzahliger Skalierungsfaktor verwendet, so wird die Anzahl der Zeilen des jeweiligen Leerabschnitts mit dem Skalierungsfaktor multipliziert, um die Anzahl der Zeilen des skalierten Leerabschnittes zu erhalten, wobei die Zeilenanzahl des skalierten Leerabschnittes gegebenenfalls auf den nächsten ganzzahligen Wert abgerundet wird, wenn das Multiplikationsergebnis einen nicht-ganzzahligen Wert liefert.

In dem dargestellten Beispiel erfolgt die Skalierung des Teletextzeichens "A", das N1 = 10 Bildpunktzeilen umfasst, derart, dass ein skaliertes Teletextzeichen mit N2 = 28 Bildpunktzeilen entsteht. Diese 28 Bildpunktzeilen resultieren aus der Skalierung des 8 Zeilen umfassenden ersten Abschnittes A1 mit dem Skalierungsfaktor S1=3 und der jeweils eine Zeile umfassenden zweiten Abschnitte B1, C1 mit einem zweiten Skalierungsfaktor S2=2. Der Skalierungsfaktor beträgt im vorliegenden Fall somit S = N2/N1 = 2,8 und ist nicht-ganzzahlig.

Die anhand von Figur 2 erläuterte Skalierung eines Teletextzeichens eignet sich beispielsweise dazu, Teletextzeichen so zu skalieren, dass ein Teletextbild mit 25 Zeilen von je 56 Zeichen "zeilenfüllend" auf einer Anzeigevorrichtung mit einer WXGA-Auflösung von 720 Bildpunktzeilen mit je 1280 Bildpunkten dargestellt werden kann. Von den 720 Bildpunktzeilen werden bei einem verwendeten Zeilenskalierungsfaktor von 2,8 25 · 28 = 700 Bildpunktzeilen ausgenutzt.

Das Verfahren eignet sich selbstverständlich auch zur Skalierung des Zeichens in Spaltenrichtung, wobei man sich bei der Skalierung von Teletextzeichen hier ebenfalls zunutze machen kann, dass die Bildpunktmatrix der Teletextzeichen in horizontaler Richtung zu beiden Seiten von einer Leerspalte begrenzt ist Diese Leerspalten können mit einem anderen Skalierungsfaktor skaliert werden, wie der von diesen Leerspalten begrenzte Abschnitt, der die Bildpunktinformation des Zeichens umfasst, wenn insgesamt ein nicht-ganzzahliger Skalierungsfaktor erreicht werden soll.

Der Skalierungsfaktor der Leerzeilen B1, C1 oder Leerspalten ist abhängig von dem ganzzahligen ersten Skalierungsfaktor S1 des ersten Zeichenabschnittes A1 so gewählt, dass die gewünschte Anzahl Zeilen oder Spalten des skalierten Zeichens erreicht wird. Hierzu besteht gegebenenfalls auch die Möglichkeit, bei Vorhandensein von zwei Leerzeilenabschnitten B1, C1 oder Leerspaltenabschnitten diese zwei Leerabschnitte mit unterschiedlichen Skalierungsfaktoren zu skalieren, und das skalierte Zeichen auf die gewünschte Anzahl Zeilen oder Spalten "aufzufüllen". Der zweite Skalierungsfaktor kann dabei auch kleiner als Eins sein, so dass Leerzeilen oder Leerspalten gelöscht werden, um betrachtet auf das Gesamt-Zeichen den gewünschten Skalierungsfaktor zu erreichen.

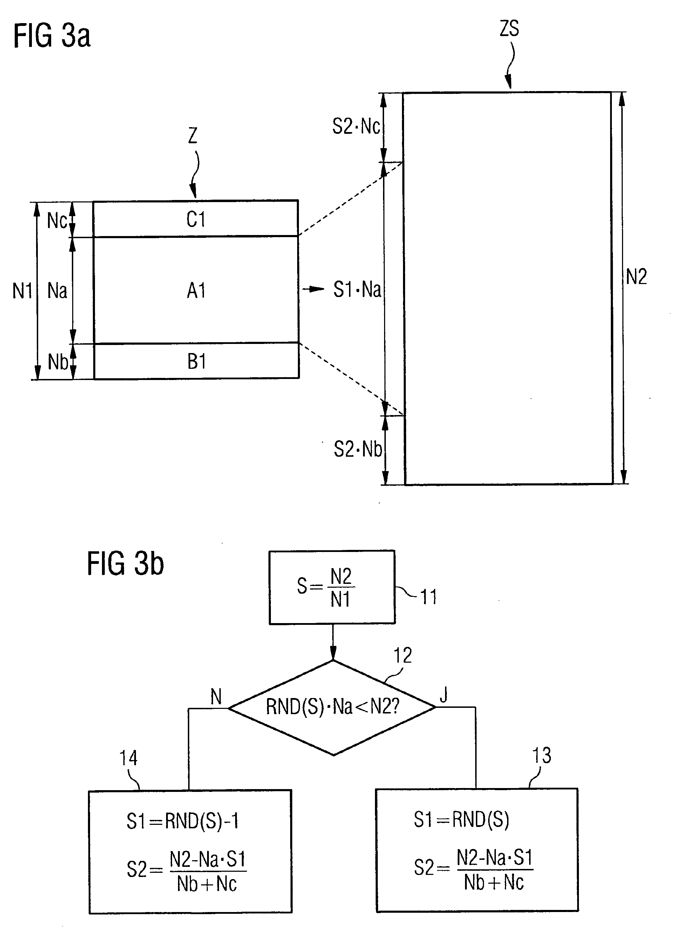

Ein mögliches Vorgehen zur Ermittlung des ersten und wenigstens einen zweiten Skalierungsfaktors S1, S2 für die Skalierung eines Zeichens Z, um ein skaliertes Zeichen ZS zu erhalten, wird nachfolgend anhand der Figuren 3a und 3b erläutert. In der nachfolgenden Beschreibung wird von einer Zeilenskalierung des Zeichens Z1 ausgegangen. Selbstverständlich sind die nachfolgenden Erläuterungen jedoch in entsprechender Weise auch auf eine Spaltenskalierung des Zeichens anwendbar.

Das zu skalierende Zeichen Z1 umfasst N1 Bildpunktzeilen und soll derart skaliert werden, dass ein skaliertes Zeichen Z2 mit N2 Bildpunktzeilen erhalten wird, wobei N2 > N1 ist. Das zu skalierende Zeichen Z1 wird vor der Skalierung in einen ersten Zeichenabschnitt A1 und beispielsweise zwei zweite Zeichenabschnitte B1, C1 unterteilt. Die Anzahl der Bildpunktzeilen des ersten Zeichenabschnittes A1 beträgt Na, die Anzahl des ersten weiteren Zeichenabschnittes B1 beträgt Nb und die Anzahl des zweiten weiteren Zeichenabschnittes C1 beträgt Nc.

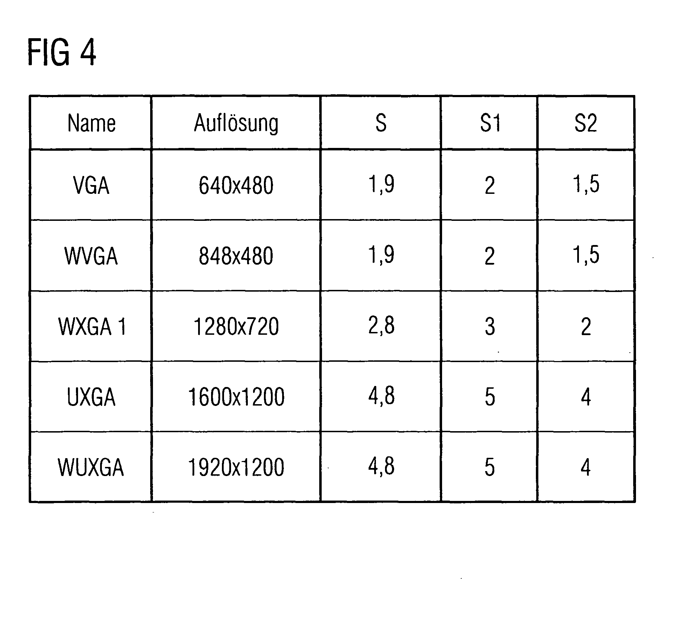

Wie bereits erläutert ergibt sich der Gesamt-Skalierungsfaktor S aus dem Quotienten der Zeilenzahl N2 des skalierten Zeichens Z2 und der Zeilenzahl N1 des zu skalierenden Zeichens Z1. Bezugnehmend auf Figur 4 wird dieser Gesamt-Skalierungsfaktor S in einem ersten Verfahrensschritt 11 zunächst ermittelt, wobei anzumerken ist, dass dieser Skalierungsfaktor auch auf andere Weise bereits zur Verfügung gestellt werden kann.

Bei einem nicht-ganzzahligen Gesamt-Skalierungsfaktor S wird der ganzzahlige erste Skalierungsfaktor S1 des ersten Zeichenabschnittes A1 als nächstgrößerer ganzzahliger Wert oder nächstkleinerer ganzzahliger Wert bezogen auf den nicht-ganzzahligen Skalierungsfaktor S gewählt. Dieser erste Skalierungsfaktor S1 kann beispielsweise durch mathematisches Runden des Gesamt-Skalierungsfaktors S erreicht werden. Allerdings muss sichergestellt werden, dass der erste Skalierungsfaktor S1 nicht so groß ist, dass bereits durch Skalieren des ersten Zeichenabschnittes A1 ein skaliertes Zeichen erhalten wird, dass mehr Zeilen als die vorgegebene Zeilenanzahl N2 aufweist. In einem nächsten Verfahrensschritt 11 wird deshalb überprüft, ob das Produkt aus der Zeilenanzahl Na des ersten Zeichenabschnittes A1 und dem gerundeten Skalierungsfaktor größer oder gleich der zweiten Zeilenanzahl N2 ist. In der Darstellung gemäß Figur 4 steht RND(.) für die erwähnte Rundungsoperation, welche den Skalierungsfaktor S auf den nächstgrößeren oder nächstkleineren ganzzahligen Wert mathematisch rundet. Sofern die Skalierung des ersten Zeichenabschnittes A1 mit dem gerundeten Skalierungsfaktor S zu einem skalierten ersten Zeichenabschnitt führt, der weniger als N2 Zeilen aufweist, wird in einem Verfahrensschritt 13 als erster Skalierungsfaktor S1 der gerundete Gesamt-Skalierungsfaktor S verwendet. Der zweite Skalierungsfaktor S2 wird dann unter der Bedingung gewählt, dass S2 · (Nb + Nc) = N2 - Na · S1 gilt. Dieser zweite Skalierungsfaktor N2 kann dabei nicht-ganzzahlig sein.

Sollte der Vergleich bei Verfahrensschritt 12 ergeben, dass die Skalierung des ersten Zeichenabschnittes A1 mit dem gerundeten Skalierungsfaktor zu einem skalierten ersten Zeichenbereich führt, der mehr als N2 Zeilen aufweist, so wird als erster Skalierungsfaktor S1 der Rundungswert in einem Verfahrenschritt 14 um Eins dekrementiert und der dekrementierte Wert wird zur Ermittlung des zweiten Skalierungsfaktors verwendet. Der Wert des zweiten Skalierungsfaktors S2 wird entsprechend der oben erläuterten Bedingung ausgewählt.

Figur 5 veranschaulicht anhand einer Tabelle die ersten und zweiten Skalierungsfaktoren S1, S2, die zur Zeichenskalierung erforderlich sind, um eine Teletextseite mit 25 Zeilen "zeilenfüllend" auf Anzeigevorrichtungen mit den in der Tabelle angegebenen Auflösungen darzustellen. Um die 25-10 = 250 Bildpunktzeile einer Standard-Teletextseite auf wenigstens annähernd 480 Bildpunktzeilen der VGA-Auflösung zu expandieren, kann ein Gesamt-Skalierungsfaktor S = 1,9 angewendet werden. Umfassen die einzelnen Teletextzeichen bezugnehmend auf Figur 3 N1 = 10 Bildpunktzeilen und wird der erste Zeichenabschnitt A1 derart gewählt, dass er Na = 8 Bildpunktezeilen umfasst, so kann der erste Skalierungsfaktor S1 = 2 gewählt werden. Die Skalierung dieses ersten Zeichenabschnittes A1 führt dann zu einem skalierten ersten Zeichenabschnitt mit S1·Na = 16 Bildpunktzeilen. Der zweite Skalierungsfaktor S2 der jeweils eine Leerzeile umfassenden zweiten Zeichenabschnitte B1, C1 beträgt dann rechnerisch (19 - 16)/ 2 = 1,5. Ein derartiger Skalierungsfaktor kann bei zwei voneinander getrennten zweiten Zeichenabschnitten B1, C1 dadurch erreicht werden, dass der eine Zeichenabschnitt mit einem Skalierungsfaktor von zwei und der andere Zeichenabschnitt mit einem Skalierungsfaktor von 1 skaliert wird. So werden beispielsweise die Leerzeilen am unteren Ende der Bildpunktmatrix verdoppelt, während am oberen Ende nur eine Leerzeile in dem skalierten Zeichen vorhanden ist.

Eine entsprechende Skalierungsvorschrift in Zeilenvorrichtung ergibt sich für die Darstellung einer Teletextseite auf einer WVGA-Anzeigevorrichtung die eine Auflösung von 480 Zeilen mit je 848 Bildpunkten umfasst.

Für die Expandierung der 250 Bildpunktzeilen einer Standard-Teletextseite auf 720 Zeilen einer WXGA1-Anzeigevorrichtung beträgt der Gesamt-Skalierungsfaktor S gleich 2.8, während der erste und zweite Skalierungsfaktor 3 bzw. 2 beträgt. Für die Expandierung zur Darstellung auf einer UXGA bzw. WUXGA-Anzeigevorrichtung mit 1200 Bildpunktzeilen beträgt der Gesamt-Skalierungsfaktor S=4,8, der erste Skalierungsfaktor S1=5 und der zweite Skalierungsfaktor S2=4.

Im weiteren sei nun der Fall betrachtet, bei dem der erste Zeichenabschnitt mit einem ersten Skalierungsfaktor kleiner als Eins symmetrisch skaliert werden soll, um zusammen mit einem geeignet gewählten zweiten Skalierungsfaktor für den zweiten Zeichenabschnitt die gewünschte Gesamt-Skalierung zu erreichen. Eine symmetrische Skalierung des ersten Zeichenabschnitts mit einem ersten Skalierungsfaktor kleiner als Eins setzt voraus, dass der erste Zeichenabschnitt in benachbarte Unterabschnitte mit jeweils gleich vielen Zeicheneinheiten unterteilt wird und dass aus jedem Unterabschnitt gleich viele Zeicheneinheiten gelöscht werden.

Beispielhaft sei das skalierte Zeichen ZS gemäß Figur 2 betrachtet, wobei angenommen wird dass dieses Zeichen nun mit einem Gesamt-Skalierungsfaktor 2,8⁻¹ = 5/14 skaliert werden soll, um zu dem "verkleinerten" skalierten Zeichen Z zu gelangen. Der die Zeicheninformation umfassende Abschnitt A2 bildet für diese verkleinernde Skalierung den ersten Zeichenabschnitt, während die Leerabschnitte B2, C2 die zweiten Zeichenabschnitte für diese verkleinernde Skalierung bilden.

Die Skalierung mit einem Gesamt-Skalierungsfaktor 5/14 wird in dem Beispiel erreicht, indem der 21 Zeilen umfassende erste Zeichenabschnitt A2 symmetrisch mit einem ersten Skalierungsfaktor 1/3 skaliert wird und indem die zweiten Zeichenabschnitte mit Skalierungsfaktoren 1/2 für den Abschnitt C2 und 2/5 für den Abschnitt B2 skaliert werden. Zur symmetrischen Skalierung des ersten Zeichenabschnitts wird dieser Zeichenabschnitt in 7 nebeneinanderliegende, jeweils 3 Zeilen umfassende Unterabschnitte A21-A27 unterteilt und jeweils 2 Zeilen jedes Unterabschnitts werden gelöscht. Dabei wird angenommen, dass jeweils die Zeilen gelöscht werden, die sich in den jeweiligen Unterabschnitten an derselben Position befinden.

Für eine symmetrische Skalierung des ersten Zeichenabschnitts mit einem ersten Skalierungsfaktor S=K/L kleiner als Eins, wobei K und L jeweils ganze Zahlen sind, gilt allgemein, dass der erste Zeichenabschnitt vollständig in Unterblöcke mit jeweils L Zeicheneinheiten zu unterteilen ist, wobei in jedem Unterblock L-(1-K/L) Zeicheneinheiten an jeweils den gleichen Positionen zu löschen sind. Eine symmetrische Skalierung mit einem solchen Skalierungsfaktor setzt mindestens voraus, dass der Quotient aus der Zeilenzahl des symmetrisch zu skalierenden Zeichenabschnitts und L eine ganze Zahl ist. Für einen Skalierungsfaktor von beispielsweise 1/3 sind also 3·(1-1/3)=2 Zeicheneinheiten aus Unterblöcken mit je 3 Zeicheneinheiten zu löschen, während bei einem Skalierungsfaktor 2/3 lediglich 3·(1-2/3)=1 Zeichenblock aus Unterblöcken mit je 3 Zeicheneinheiten zu löschen ist.

Die Skalierung der beiden Leerabschnitte B2, C2 mit den Skalierungsfaktoren 2/5 und 1/2 ist unsymmetrisch, da sich die Leerabschnitte B2, C2 nicht in mehr als einen Unterblock mit 2 bzw. 5 Zeilen unterteilen lassen.

Wie anhand des Beispiels von Figur 2 erläutert, erfolgt bei einer Skalierung mit einem Gesamt-Skalierungsfaktor kleiner als Eins die Unterteilung des Zeichens in den ersten und den wenigstens einen zweiten Zeichenabschnitt so, dass der erste Zeichenabschnitt symmetrisch mit einem ersten Skalierungsfaktor skalierbar ist, der der Kehrwert einer ganzen Zahl ist.

Abschließend sei darauf hingewiesen, dass bei einer gewünschten Skalierung mit einem Gesamt-Skalierungsfaktor größer als Eins einer der beiden Skalierungsfaktoren auch kleiner als Eins sein kann, während bei einer gewünschten Skalierung mit einem Gesamt-Skalierungsfaktor kleiner als Eins einer der beiden Skalierungsfaktoren auch größer als Eins sein kann.

## Patentansprüche

1. Verfahren zur Skalierung eines Bildzeichens ,das eine Zeichenmatrix mit einer Anzahl Zeicheneinheiten, die wenigstens in einer horizontalen Richtung oder einer vertikalen Richtung nicht unterteilbar sind, aufweist, und wobei das Verfahren folgende Verfahrensschritte umfasst:
- Unterteilen der Zeichenmatrix in einen ersten und wenigstens einen zweiten Zeichenabschnitt (A1, B1, C1), die jeweils wenigstens eine der Zeicheneinheiten umfassen,
- symmetrisches Skalieren des ersten Zeichenabschnitts (A1) mit einem ersten Skalierungsfaktor,
- Skalieren des wenigstens einen zweiten Zeichenabschnittes (B1, C1) mit einem zu dem ersten Skalierungsfaktor unterschiedlichen zweiten Skalierungsfaktor.

2. Verfahren nach Anspruch 1, bei dem
- bei einer symmetrischen Skalierung des ersten Zeichenabschnitts (A1) mit einem ersten Skalierungsfaktor größer als Eins die Zeicheneinheiten des ersten Abschnitts (A1) entsprechend des Wertes des ersten Skalierungsfaktors wiederholt nebeneinander dargestellt werden,
- bei einer symmetrischen Skalierung des ersten Zeichenabschnitts (A1) mit einem ersten Skalierungsfaktor kleiner als Eins der erste Zeichenabschnitt in wenigstens zwei Unterabschnitte mit jeweils gleich vielen Zeicheneinheiten unterteilt und aus jedem Unterabschnitt gleich viele Zeicheneinheiten an jeweils gleichen Positionen des Unteranschnitts gelöscht werden.

3. Verfahren nach Anspruch 1 oder 2, bei dem der erste Skalierungsfaktor größer Eins und ganzzahlig ist.

4. Verfahren nach einem der Ansprüche 1 bis 3, bei dem der erste Skalierungsfaktor der Kehrwert einer ganzen Zahl ist.

5. Verfahren nach einem der vorangehenden Ansprüche, bei dem die Zeichenmatrix einen Zeicheninformationen enthaltenden Informationsabschnitt und einen keine Zeicheninformationen enthaltenden Leerabschnitt aufweist und derart unterteilt wird, dass der erste Zeichenabschnitt (A1) den Informationsabschnitt und der wenigstens eine zweite Zeichenabschnitt (B1, C1) den Leerabschnitt umfasst.

6. Verfahren nach einem der vorangehenden Ansprüche, bei dem der wenigstens eine zweite Zeichenabschnitt so gewählt ist, dass er genau eine Zeicheneinheit umfasst.

7. Verfahren nach einem der vorangehenden Ansprüche, bei dem die Zeichenmatrix in einen ersten Zeichenabschnitt (A1) und zwei zweite Zeichenabschnitte (B1, C1) unterteilt wird, wobei der erste Zeichenabschnitt (A1) zwischen den zweiten Zeichenabschnitten (B1, C1) angeordnet ist.

8. Verfahren nach Anspruch 7, bei dem die zweiten Zeichenabschnitte (B1, C1) so gewählt sind, dass sie jeweils genau eine Zeicheneinheit umfassen.

9. Verfahren nach Anspruch 7 oder 8, bei dem die zweiten Zeichenabschnitte (B1, C1) mit unterschiedlichen zweiten Skalierungsfaktoren skaliert werden.

10. Verfahren nach einem der vorangehenden Ansprüche, bei dem die Skalierung eine Filterung der skalierten Zeichenmatrix umfasst.

11. Verfahren nach einem der vorangehenden Ansprüche, bei dem die Zeicheneinheiten Zeilen der Zeichenmatrix sind.

12. Verfahren nach einem der vorangehenden Ansprüche, bei dem die Zeicheneinheiten Spalten der Zeichenmatrix sind.

13. Verfahren nach einem der vorangehenden Ansprüche, bei dem die Zeichenmatrix Zeilen und Spalten umfasst und bei dem die Zeilen und/oder Spalten skaliert werden.

14. Verfahren nach einem der vorangehenden Ansprüche, bei dem der zweite Skalierungsfaktor ganzzahlig ist.

15. Verfahren nach einem der vorangehenden Ansprüche, bei dem der zweite Skalierungsfaktor nicht-ganzzahlig ist.

16. Verfahren nach einem der vorangehenden Ansprüche, bei dem das Bildzeichen ein Teletextzeichen mit einer Zeichenmatrix von 12 Spalten mal 10 Zeilen ist.
